# EUROPEAN PATENT SPECIFICATION

(11) **EP 0 517 528 B1**
(45) Date of publication and mention of the grant of the patent: **13.08.1997**
(21) Application number: 92305146.0
(22) Date of filing: 04.06.1992
(51) Int. Cl.: G11B 5/008, G11B 15/12, G11B 15/18

(54) **Magnetic recording and reproducing apparatus**
Magnetaufzeichnungs- und Wiedergabegerät
Appareil d'enregistrement et de reproduction magnétique

(30) Priority: 07.06.1991 JP 163974/91
(43) Date of publication of application: 09.12.1992
(73) Proprietor: SONY CORPORATION, Tokyo (JP)
(72) Inventor: Sakai, Seiichi, c/o Patents Div., Sony Corporation, Tokyo 141 (JP); Iwasaki, Yasuo, c/o Patents Div., Sony Corporation, Tokyo 141 (JP)
(74) Representative: Harris, Ian Richard

(56) References cited:
- EP-A- 0 383 145
- PATENT ABSTRACTS OF JAPAN vol. 11, no. 279 (P-614)10 September 1987 JP-A-62 076 010
- PATENT ABSTRACTS OF JAPAN vol. 7, no. 188 (P-217)17 August 1983 JP-A-58 088 826

## Description

This invention relates to magnetic recording and reproducing apparatus.

An example of a known magnetic recording and reproducing apparatus is a digital video tape recording (DVTR) wherein a magnetic tape is helically scanned by a rotary head so that an information signal in the form of, for example, a digital video signal is recorded onto or reproduced from record tracks formed on the magnetic tape obliquely with respect to a transport direction of the magnetic tape.

DVTRs of different formats are provided: a DVTR of the D-1 format of the SMPTE (Society of Motion Picture and Television Engineers) standards records and reproduces a component digital video signal: and a DVTR of the D-2 format of the SMPTE standards records and reproduces a composite digital video signal. In accordance with the two formats, a video signal for a field is recorded and reproduced over a plurality of record tracks.

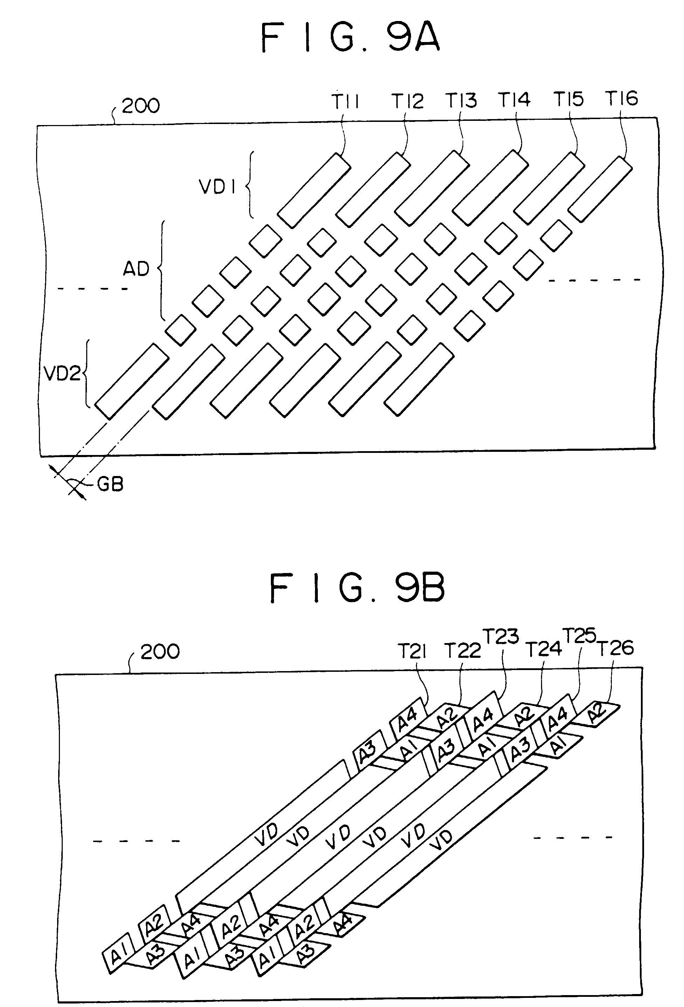

A DVTR of the D-1 format uses so-called guard band recording. In particular, referring to Figure 9A, a digital video signal is recorded on a magnetic tape 200 in such a format that a guard band GB is interposed between each adjacent ones of record tracks T11, T12, T13, T14, T15, T16, ... and T1N.

On the other hand, a DVTR of the D-2 format uses so-called azimuth close recording. In particular, referring to Figure 9B, a digital video signal is recorded successively on record tracks T21, T23, T24, T25, T26, ... and T2N of a magnetic tape 200 which have alternately different azimuths.

The record tracks TIN of the D-1 format shown in Figure 9A are formed obliquely with respect to a transport direction of the magnetic tape 200 with a guard band GB interposed between each adjacent ones thereof, and a digital audio signal AD for four channels is recorded at a central portion of each record track T1N, with digital video signals VD1 and VD2 recorded at portions below and above the central portion, respectively. It is to be noted that, in the case of the D-1 format, digital video signals VD1 and VD2 for one field are recorded over, for example, ten or twelve record tracks T1N.

On the other hand, the record tracks T2N of the D-2 format shown in Figure 9B are successively formed obliquely with respect to a feeding direction of the magnetic tape 200 with alternately different azimuths, and a digital video signal VD is recorded at a central portion of each record track T2N, while digital audio signals A1, A2 and A3, A4 for four channels are recorded at portions below and above the central portion, respectively, by the technique of double recording. It is to be noted that, in the case of the D-2 format, a digital video signal VD for one field is recorded, for example, over six record tracks T2N.

If in such a DVTR the pitch of record tracks is reduced in order to achieve a higher recording density, with guard band recording based on the D-1 format, the efficiency in utilization of a tape is low because guard bands are involved, and as a result, a comparatively large track pitch is required.

On the other hand, since a DVTR of the D-2 format uses azimuth close recording which involves no guard band, it is considered basically suitable for achieving reduction in the pitch of record tracks for high recording density.

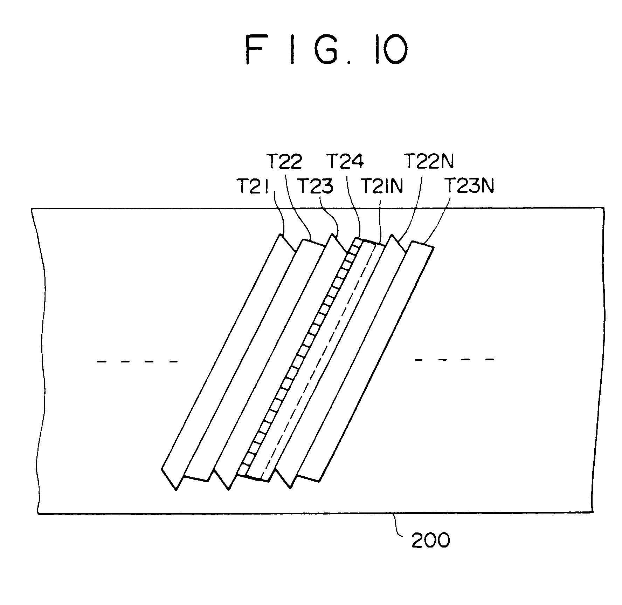

However, if the pitch of the record tracks is further reduced, then when a tracking error occurs during editing by overwriting, an old record track T24 which is left unerased and has the same phase azimuth will remain at a portion T21N at which such overwriting starts, as shown in Figure 10, which deteriorates the S/N ratio. As a result, the error rate upon reproduction is deteriorated and the quality of a reproduced picture is deteriorated.

If an information signal for one record unit is recorded over a plurality of record tracks on a magnetic tape and a guard band is formed between each adjacent ones of record units each including such record tracks on the magnetic tape, then the number of guard bands between record tracks which are specified for a DVTR of the D-1 format can be reduced to one for each field, and the track pitch of record tracks can be reduced to achieve recording at a higher density.

Further, an unerased portion of an old record track of the same phase azimuth, which may occur when the track pitch of record tracks in a DVTR of the D-2 format is reduced, can be erased with certainty by employing a flying erase head, and the pitch of record tracks can be reduced to achieve recording of a digital video signal with a higher recording density.

EP-A-O 383 145 discloses apparatus for recording and reproducing signals on a helically scanned magnetic tape in which record units each comprise pairs of tracks recorded with different azimuth angles but no guard bands between the tracks. The record units are separated by guard bands. The guard bands are formed between record units recorded during an edit; unedited record units are not separated by guard bands.

According to the present invention, there is provided a magnetic recording and reproducing apparatus wherein a magnetic tape is helically scanned by a rotary head unit to record or reproduce a desired information signal onto or from the magnetic tape; comprising: information signal recording means for recording an information signal for one record unit across a plurality of record tracks on the magnetic tape and forming a guard band between adjacent ones of said record units each composed of the same number of record tracks on the magnetic tape, adjacent tracks in a unit being recorded with different azimuth angles and without guard bands therebetween; characterised in that said information signal recording means comprises: time base compressing means for time base compressing said information signal to be recorded; signal processing means for performing predetermined processing of the time base compressed signal and selectively outputting the thus processed signal to a plurality of channels, said signal processing means having a controlling function to control permission or inhibition of outputting of a signal to said different channels; and a plurality of magnetic heads for recording a signal selectively outputted to said channels onto the magnetic tape: said magnetic heads recording, when said signal processing means provides permission for signal outputting, a signal onto the same number of tracks on the magnetic tape, but when said signal processing means provides inhibition of signal outputting, a guard band is formed on the magnetic tape along a locus of scanning movement of that one of said magnetic heads to which supply of a signal is stopped.

In high density recording of an information signal, it is very important to effect accurate tracking control.

An example of a known techniques for tracking control is a so-called dynamic tracking head wherein a voltage is applied to a piezoelectric element provided on a head chip, so as to displace the head chip in a direction perpendicular to the record tracks.

In control is a such a dynamic tracking head (hereinafter referred to merely as dynamic tracking), it is necessary to detect the amount of displacement between a record track and a locus of a reproducing head, in order automatically to correct a tracking error which is caused by a variation in speed of the tape or by exchange of the tape.

Two techniques are known for detecting an amount of such displacement: one of them is a high speed wobbling method and the other is a mountain climbing method. According to the high speed wobbling method, while one track is being traced. the head is vibrated at a frequency of, for example, 700 to 800 Hz or so to detect the amount of displacement.

On the other hand, the mountain climbing method is a low speed wobbling method, and while one track is being traced, the head is fixed in position without being oscillated, and then, subsequent tracking is performed with the head displaced from the former position. In short, according to the mountain climbing method, the direction of the next displacement of the head is determined in accordance with the direction of preceding displacement of the head, and change in the level of the reproduction RF envelope, and the amount of displacement is detected and corrected in response to the direction of displacement thus determined. Such tracking controlling system of the mountain climbing method is disclosed, for example, in Japanese laid-open patent specification 61/182622.

With a recording format wherein a guard band is interposed between adjacent record units as described above. since no information signal is recorded on a guard band, sampling of the level of a reproduction RF envelope cannot be performed, and tracking will be impossible in the guard band.

An embodiment of the present invention further comprises head displacing elements which support pairs of the magnetic heads; level detecting means for detecting levels of reproduction signals obtained when said magnetic heads scan said record tracks on the magnetic tape; controlling signal forming means for forming controlling signals to control said head displacing elements in dependence on the detected levels of reproduction signals so that said magnetic heads scan said record tracks on the magnetic tape, and forming such controlling signal for a displacing element supporting a pair of magnetic heads one of which heads scans a guard band on the magnetic tape, in accordance with the level of an output of one of said magnetic heads of the pair produced when scanning a record track on the magnetic tape; and actuating means for actuating one of said head displacing elements in response to the controlling signal from said controlling signal forming means.

In the said embodiment wherein when one head of a pair scans a guard band, the head displacing element supporting that pair is actuated in response to the controlling signal formed in dependence upon the detected level of the signal reproduced by the other head of the pair. Preferably in the said embodiment said controlling signal forming means includes means for judging that the said one of said pair of magnetic heads is scanning a guard band on the magnetic tape; and when said judging means judges that none of said magnetic heads is scanning a guard band, said controlling signal forming means calculates a difference between information obtained newly from said level detecting means and level information obtained already from said level detecting means and originating from one of said magnetic heads from which the newly obtained information originates and determines a direction of displacement of one of said head displacing elements in response to the difference and forms a controlling signal in accordance with the thus determined direction of displacement; but when said judging means judges that said one of the heads scans a guard band said ,controlling signal forming means calculates a difference between level information originating newly from the said other of said magnetic heads which is not scanning the guard band and level information originating already from the same magnetic head and determines a direction of displacement of one of said head displacing elements in response to the difference and forms a controlling signal in accordance with the thus determined direction of displacement.

Alternatively when a magnetic head scans a guard band, the head displacing element supporting that head is actuated in response to a fixed control amount determined before scanning of the guard band by the head. Preferably, said controlling signal forming means includes means for judging that one of said magnetic heads is scanning a guard band on a magnetic tape; and when said judging means judges that none of said magnetic heads is scanning a guard band, said controlling signal forming means calculates a difference between information obtained newly from said level detecting means and level information obtained already from said level detecting means and originating from one of said magnetic heads from which the newly obtained information originates and determines a direction of displacement of one of said head displacing elements in response to the difference and forms a controlling signal in accordance with the thus determined direction of displacement; but when said judging means judges that a guard band is being scanned, said controlling signal forming means holds and outputs an already formed controlling signal; and then: when said judging means judges that no guard band is being scanned, said controlling signal forming means starts formation of a new controlling signal.

The invention will now be described by way of example with reference to the accompanying drawings, throughout which like parts are referred to by like references, and in which:
Figure 1 is a diagrammatic view illustrating a track pattern formed on a magnetic tape and positions of magnetic heads with respect to the magnetic tape upon reproduction;
Figure 2 is a schematic view showing head actuators and magnetic heads on a rotary head;
Figures 3A, 3B and 3C are diagrammatic views illustrating different arrangements of the magnetic heads and a magnetic record pattern obtained by the arrangement of the magnetic heads of Figure 3B;
Figure 4 is a block diagram of a recording system of an embodiment of magnetic recording and reproducing apparatus according to the present invention;
Figure 5 is a block diagram of a dynamic tracking controlling circuit of a reproducing system of an embodiment of magnetic recording and reproducing apparatus according to the present invention;
Figure 6 is a diagram showing RF envelopes of reproduction signals obtained upon reproduction of a magnetic tape recorded by an embodiment of magnetic recording and reproducing apparatus according to the present invention;
Figure 7 is a flow chart illustrating alternative operation of the dynamic tracking controlling circuit of Figure 5;
Figures 9A and 9B are diagrammatic views illustrating track patterns recorded in different known formats; and
Figure 10 is a diagrammatic view illustrating an unerased portion of an old record track caused by a tracking error upon editing by overwriting.

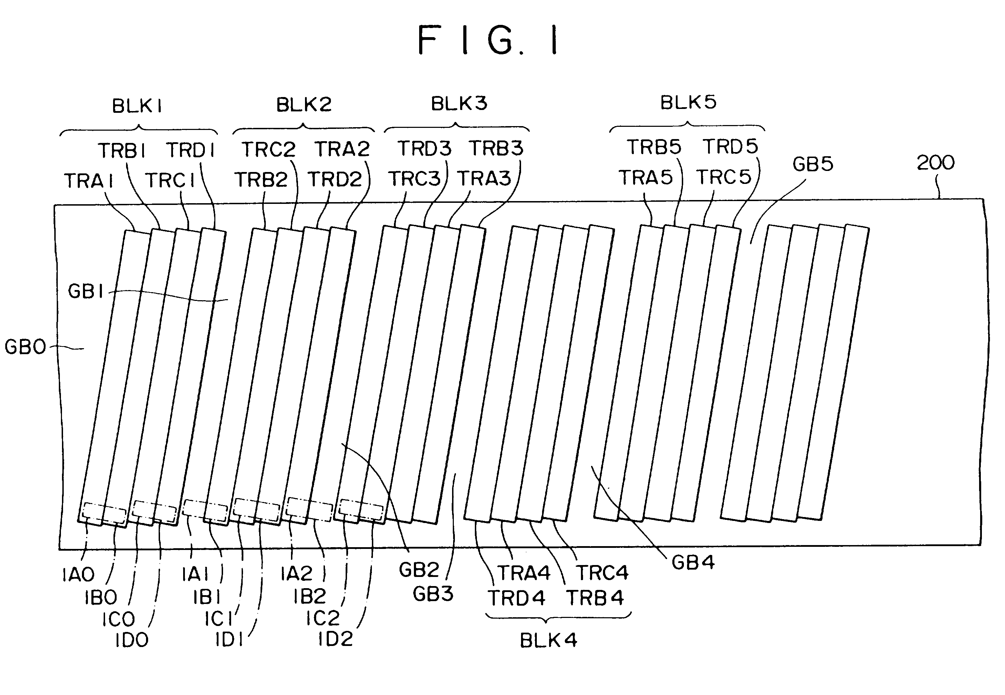

Referring first to Figure 1, there is shown a track pattern which is formed, upon recording, on a magnetic tape by an embodiment of magnetic recording and reproducing apparatus according to the present invention. A video signal for one field is recorded in one block BLK which is composed of four tracks. For example, a first field is constituted from a block BLK1, and a second field is constituted from a block BLK2.

A guard band GB having a width equal to the width of one track is interposed between adjacent blocks.

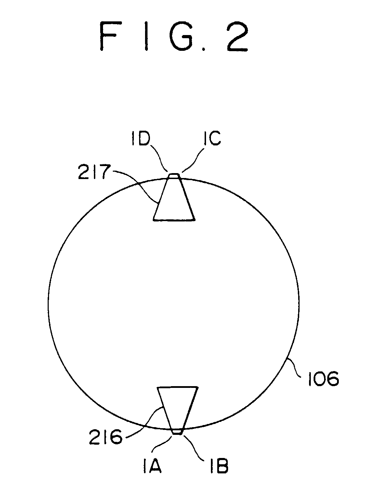

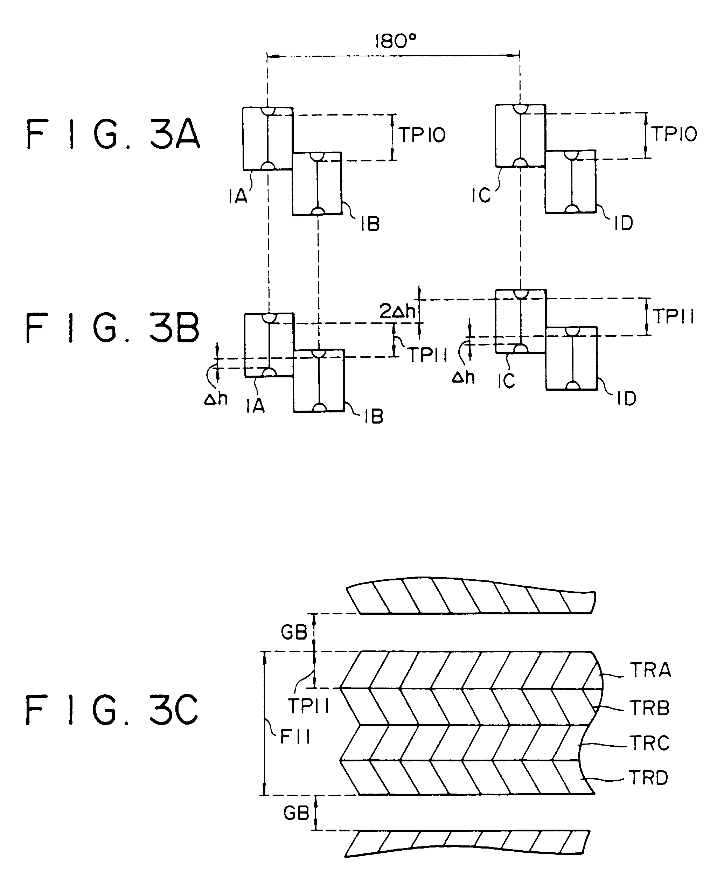

A method of recording the recording format shown in Figure 1 is illustrated in Figures 3A to 3C. A guard band is formed by mounting four magnetic heads on a drum such that they are displaced by a predetermined distance from each other in height. In particular, referring to Figure 2, the four magnetic head 1A, 1B, 1C and 1D are disposed on a rotary drum 106 such that the pair of magnetic heads 1A and 1B are displaced by 180 degrees in a circumferential direction of the rotary drum 106 from the other pair of magnetic heads 1C and 1D. It is to be noted that the following description proceeds on the assumption that each of the magnetic heads 1A, 1B, 1C and 1D has both of recording and reproducing functions. The magnetic heads 1A, 1B, and 1C, 1D are mounted on the rotary drum 106 by way of a pair of head actuators 216 and 217, respectively. With such construction, the head actuators 216 and 217 are kept at fixed heights during recording operation, but during reproducing operation, they are controlled to actuate the magnetic heads 1A, 1B and 1C, 1D, respectively. The magnetic heads 1A, 1B and 1C, 1D may alternatively be provided only for recording, and in this instance, the magnetic heads 1A, 1B and 1C, 1D may be mounted directly on the rotary drum 106 without by way of the head actuators 216 and 217.

Referring back to Figure 3A, there is shown an arrangement of the magnetic heads which does not form a guard band. The magnetic heads 1A and 1C are disposed in a spaced relationship 180 degrees from each other in a circumferential direction of the rotary head 106, and the other magnetic heads 1B and 1D having a different azimuth angle from the azimuth angle of the magnetic heads 1A and 1C are disposed at positions displaced by a distance equal to a height corresponding to a track pitch TP10 on the trailing side of the magnetic heads 1A and 1C, respectively.

If the head arrangement which does not form a guard band is modified such that the magnetic heads 1A and 1B are displaced by Δh from each other while the magnetic heads 1C and 1D are displaced by Δh from each other and the set of the magnetic heads 1C and 1D is displaced by 2 Δh from the other set of the magnetic heads 1A and 1B as shown in Figure 3B, then the original track pitch TP10 is reduced to a smaller track pitch TP11. Consequently, a guard band GB is formed as shown in Figure 3C.

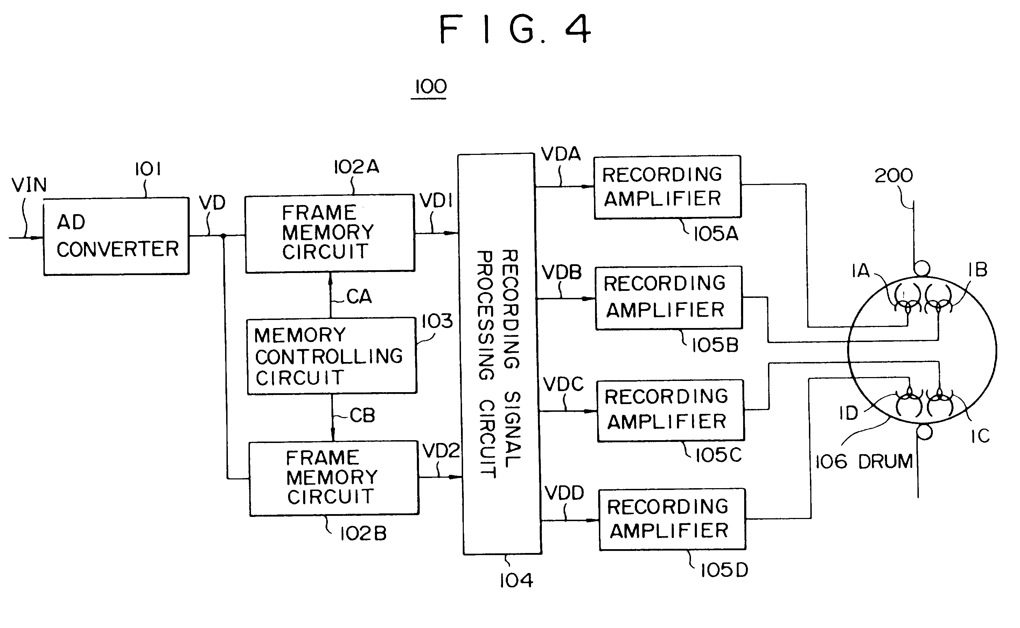

A method of recording the recording format shown in Figure 1 wherein a guard band is formed according to the present invention is illustrated in Figure 4. With this recording method, supply of a recording current to a magnetic head upon recording is stopped to prevent formation of a record track, thereby to form a non-recorded portion, that is, a guard band.

Referring to Figure 4, there is shown a recording system of a magnetic recording and reproducing apparatus according to the present invention. A video signal VIN inputted to the recording system of the magnetic recording and reproducing apparatus shown is converted from an analogue signal into a digital signal by an analogue to digital (A/D) converter 101. The digital video signal VD thus obtained is inputted to a pair of frame memory circuits 102A and 102B each constituted from a pair of field memories.

Each of the frame memory circuits 102A and 102B acts as a socalled double buffer memory such that is successively and alternately fetches a digital video signal VD in the unit of a frame and successively and alternately forwards the digital video signal VD in the unit of a frame in response to a controlling signal received from a memory controlling circuit 103. The digital signals VD forwarded from the frame memory circuits 102A and 102B are signal data compressed in the unit of a field in response to controlling signals CA and CB, respectively, from the memory controlling circuit 103. The data compressed digital video signals VD1 and VD2 are forwarded to a recording signal processing circuit 104.

The recording signal processing circuit 104 performs coding for error correction and modulation in accordance with a predetermined modulating method of digital video signals VD1 and VD2 inputted thereto and distributes the thus processed input digital video signals VD1 and VD2 into four channels to produce recording digital video signals VDA, VDB, VDC and VDD. The recording digital video signals VDA, VDB, VDC and VDD thus produced are supplied by way of recording amplifiers 105A, 105B, 105C and 105D to the magnetic heads 1A, 1B, 1C and 1D, respectively, disposed on the rotary drum 106.

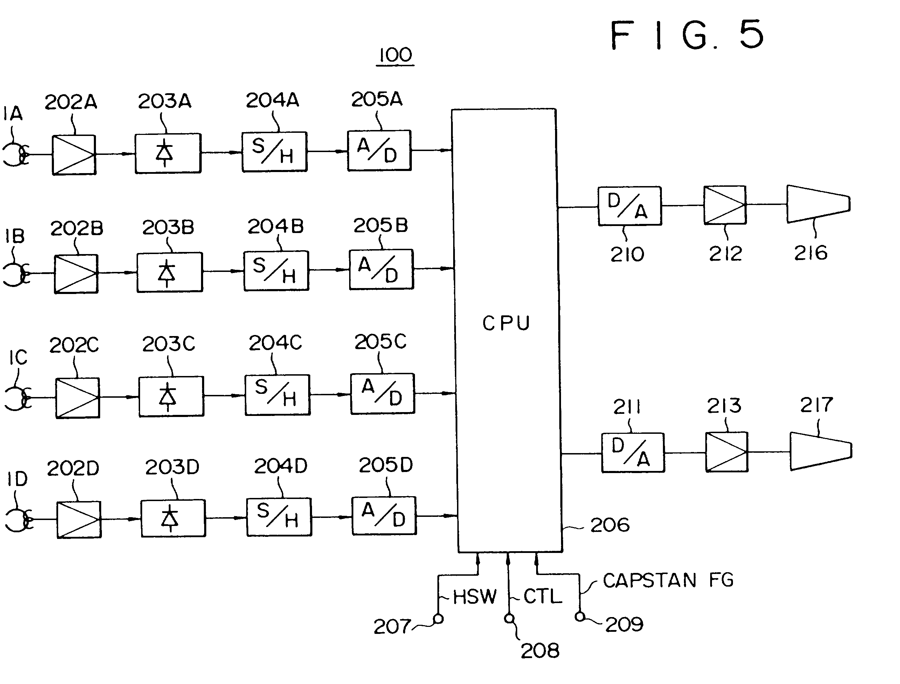

In the present embodiment, the recording signal processing circuit 104 or the recording amplifiers 105A, 105B, 105C and 105D are controlled by a recording controlling circuit (CPU 206 in Figure 5, but not shown in Figure 4) so that a digital video signals VDA, VDB, VDC or VDD may not be supplied to a corresponding one of the magnetic heads 1A, 1B, 1C and 1D for a surplus period of time obtained by data compression in the unit of field in order to render the magnetic head 1A, 1B, 1C or 1D inoperative, thereby to form a guard band GB for each field on the magnetic tape 200.

The track pattern shown in Figure 1 is formed by rendering the magnetic head 1A, 1B, 1C or 1D inoperative in this manner.

If supply of a recording electric current to a magnetic head is stopped upon recording so that the track may not be formed, then the positions of four tracks TRA, TRB, TRC and TRD formed by the four magnetic heads 1A, 1B, 1C and 1D, respectively, are successively varied for different blocks BLK. Figure 1 shows the manner of such variation.

For example, in a block BLK1, four tracks TRA1, TRB1, TRC1 and TRD1 are formed in this order by the magnetic heads 1A, 1B, 1C and 1D, respectively.

Then, a guard band GB1 is formed by stopping a recording operation of the magnetic head 1A. Accordingly, in a block BLK2, four tracks TRB2, TRC2, TRD2 and TRA2 are formed in this order by the magnetic head 1B, 1C, 1D and 1A, respectively.

A guard band GB2 is formed by stopping a recording operation of the magnetic head 1B. Accordingly, in a block BLK3, four tracks TRC3, TRD3, TRA3 and TRB3 are formed in this order by the magnetic heads 1C, 1D, 1A and 1B, respectively.

A guard band GB3 is formed by stopping a recording operation of the magnetic head 1C. Accordingly, in a block BLK4, four tracks TRD4, TRA4, TRB4 and TRC4 are formed in this order by the magnetic heads 1D, 1A, 1B and 1C, respectively.

A guard band GB4 is formed by stopping a recording operation of the magnetic head 1D. Accordingly, in a block BLK5, four tracks TRA5, TRB5, TRC5 and TRD5 are formed in this order by the magnetic heads 1A, 1B, 1C and 1D, respectively.

The recording format wherein a guard band is disposed between each adjacent ones of record units each constituted from a plurality of record tracks is formed on the magnetic tape 200 in such a manner as described above.

Subsequently, tracking control for accurately scanning record tracks formed in such a manner as described above will be described.

The general construction of a tracking controlling circuit provided in a reproducing apparatus 100 according to the present invention is shown in Figure 5. Reproduction RF signals reproduced from the magnetic heads 1A, 1B, 1C and 1D are supplied to envelope detecting circuits 203A, 203B, 203C and 203D by way of amplifiers 202A, 202B, 202C and 202D, respectively.

The magnetic heads 1A, 1B and 1C are provided respectively on the dynamic tracking head actuators (hereinafter referred to as head actuators) 216 and 217 disposed in a spaced relationship by 108 degrees from each other in a circumferential direction on the rotary drum 106 as described hereinabove with reference to Figure 2. In particular, the magnetic heads 1A and 1B are mounted on the head actuator 216, and the magnetic heads 1C and 1D are mounted on the head actuator 217.

The envelope detecting circuits 203A, 203B, 203C and 203D detect envelopes of reproduction RF signals of individual channels to obtain reproduction RF envelopes, which are subsequently supplied to sample holding circuits 204A, 204B, 204C and 204D, respectively.

The sample holding circuits 204A, 204B, 204C and 204D hold levels of the received reproduction RF envelopes at a timing at which a predetermined timing signal is supplied thereto. The thus held reproduction RF envelope levels are supplied to A/D converters 205A, 205B, 205C and 205D.

The A/D converters 205A, 205B, 205C and 205D digitize the reproduction RF envelope levels from the sample holding circuits 204A, 204B, 204C and 204D, respectively. Data produced at the A/D converters 205A, 205B, 205C and 205D are supplied to a CPU (central processing unit) 206.

In the CPU 206, the data supplied thereto are stored in predetermined registers. Further, when predetermined requirements are met in accordance with magnitudes and variations of the envelope levels, the CPU 206 performs calculation of a direction and/or and amount of displacement of the magnetic head 1A, 1B or 1C, 1D.

An RF switching pulse (hereinafter referred to as HSW signal) is supplied to the CPU 206 by way of a terminal 207, and a CTL signal is supplied to the CPU 206 by way of another terminal 208. Further, a capstan FG signal is supplied to the CPU 206 by way of a further terminal 209.

The HWS signal, CTL signal, capstan FG signal and so further are used in the CPU 206 for software processing and also for controlling of the system.

As described hereinabove, calculation of an amount of displacement of the magnetic head 1A, 1B or 1C, 1D is performed by the CPU 206. Data obtained by the calculation are supplied to a pair of digital to analogue (D/A) converters 210 and 211.

The D/A converters 210 and 211 convert the received data into analogue signals from the D/A converters 210 and 211 are supplied to a pair of head actuator driving amplifiers 212 and 213, respectively.

The head actuator driving amplifiers 212 and 213 control driving of the head actuators 216 and 217 in response to the analogue signals supplied thereto from the PCU 206 by way of the D/A converters 210 and 211, respectively.

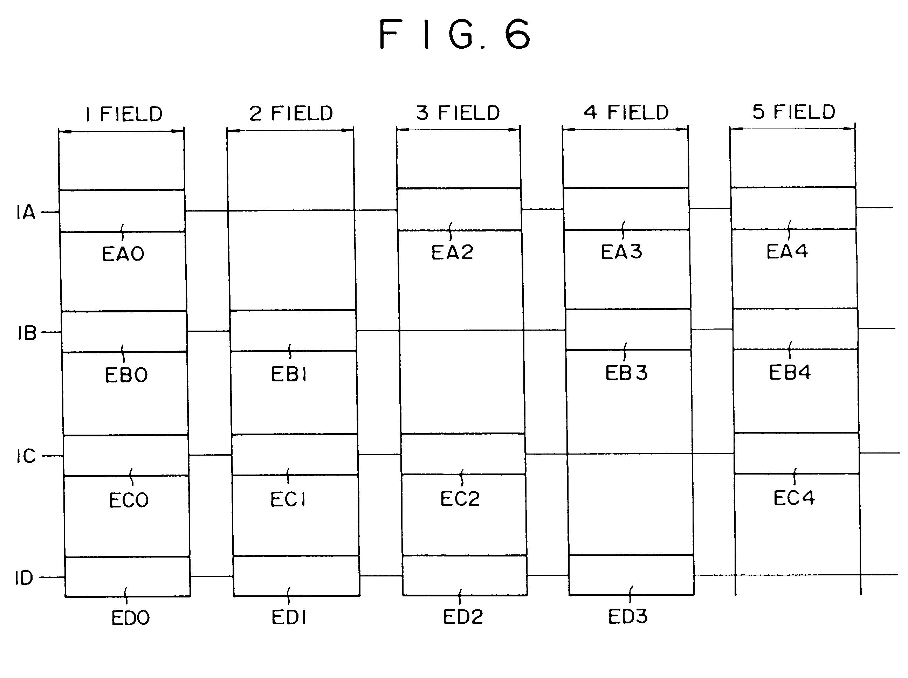

Dynamic tracking control with the construction shown in Figure 5 will be described subsequently with reference to Figures 1 and 6.

At the timing of starting of reproduction, the magnetic heads 1A and 1B are positioned at starting ends of the tracks TRA1 and TRB1, respectively, as indicated by broken lines in Figure 1. The magnetic head 1A at the timing is denoted at 1A0 and the magnetic head 1B is denoted at 1B0. From the condition, the magnetic heads 1A0 and 1B0 start tracing of the tracks TRA1 and TRB1, respectively.

At the timing when the rotary drum 106 completes its half rotation, the magnetic heads 1A0 and 1B0 leave the tracks TRA1 and TRB1, respectively. Meanwhile, the magnetic heads 1C and 1D are positioned at starting ends of the tracks TRC1 and TRD1, respectively, as indicated by broken lines in Figure 1. The magnetic head 1C at the timing is denoted at 1C0 and the magnetic head 1D is denoted at 1D0. From the condition, the magnetic heads 1C0 and 1D0 start tracing of the tracks TRC1 and TRD1, respectively.

At the timing when the rotary drum 106 completes its one full rotation, the magnetic heads 1C0 and 1D0 leave the tracks TRC1 and TRD1, respectively. Meanwhile, the magnetic heads 1A and 1B are positioned at starting ends of the guard band GB1 and the track TRB2, respectively, as indicated by alternate long and short dash lines in Figure 1. The magnetic head 1A at the timing is denoted at 1A1 and the magnetic head 1B is denoted at 1B1. From the condition, the magnetic head 1A1 starts tracing of the guard band GB1 and the magnetic head 1B1 starts tracing of the track TRB2.

At the timing when the rotary drum 106 completes its one and half rotations, the magnetic head 1B1 leaves the track TRB2. Meanwhile, the magnetic heads 1C and 1D are positioned at starting ends of the tracks TRC2 and TRD2, respectively, as indicated by alternate long and short dash lines in Figure 1. The magnetic head 1C at the timing is denoted at 1C1 and the magnetic head 1D is denoted at 1D1. From the condition, the magnetic heads 1C1 and 1D1 start tracing of the tracks TRC2 and TRD2, respectively.

At the timing when the rotary drum 106 completes its two full rotations, the magnetic heads 1C1 and 1D1 leave the track TRC2 and TRD2, respectively. Meanwhile, the magnetic heads 1A and 1B are positioned at starting ends of the track TRA2 and the guard band GB2, respectively, as indicated by alternate long and short dash lines in Figure 1. The magnetic head 1A at the timing is denoted at 1A2 and the magnetic head 1B is denoted at 1B2. From the condition, the magnetic head 1A2 starts tracing of the track TRA2 and the magnetic head 1B2 starts tracing of the guard band GB2.

At the timing when the rotary drum 106 completes its two and half rotations, the magnetic head 1A2 leaves the track TRA2. Meanwhile, the magnetic heads 1C and 1D are positioned at starting ends of the tracks TRC2 and TRD2, respectively, as indicated by alternate long and short dash lines in Figure 1. The magnetic head 1C at the timing is denoted at 1C2 and the magnetic head 1D is denoted at 1D2.

After that, at a timing of each half rotation of the rotary drum 106, the magnetic heads 1A, 1B and 1C, 1D are positioned at starting ends of and start tracing of a pair of ones of the tracks TRA, TRB, TRC and TRD and guard band GB in a similar manner. Then, the operation is repeated.

Envelope outputs for successive fields upon reproduction are shown in Figure 6. Envelope outputs of the magnetic heads 1A0, 1B0, 1C0 and 1D0 in a first field are denoted by EA0, EB0, EC0 and ED0, respectively, and envelope outputs of the magnetic heads 1B1, 1C1 and 1D1 in a second field are denoted by EB1, EC1 and ED1, respectively. Envelope outputs of the magnetic fields 1A2, 1C2 and 1D2 in a third field are denoted by EA2, EC2 and ED2, respectively. Similarly, envelope outputs in a fourth field are denoted by EA2, EB3 and ED3, and envelope outputs in a fifth field are denoted by EA4, EB4 and EC4.

As seen from Figure 6, in the present embodiment, a field in which an envelope output is not obtained takes place for each predetermined period. Dynamic tracking cannot be performed in such field in which an envelope output is not obtained.

However, the magnetic heads 1A and 1B are mounted on the head actuator 216 while the magnetic heads 1C and 1D are mounted on the head actuator 217 as shown in Figure 2. Accordingly, dynamic tracking can be performed in accordance with a reproduction RF envelope obtained from one of a pair of magnetic heads mounted on each of the head actuators 216 and 217.

In the case of the present embodiment, dynamic tracking of one of a pair of magnetic heads can be performed in accordance with an output of a reproduction RF envelope obtained from the other magnetic head for substantially the same period.

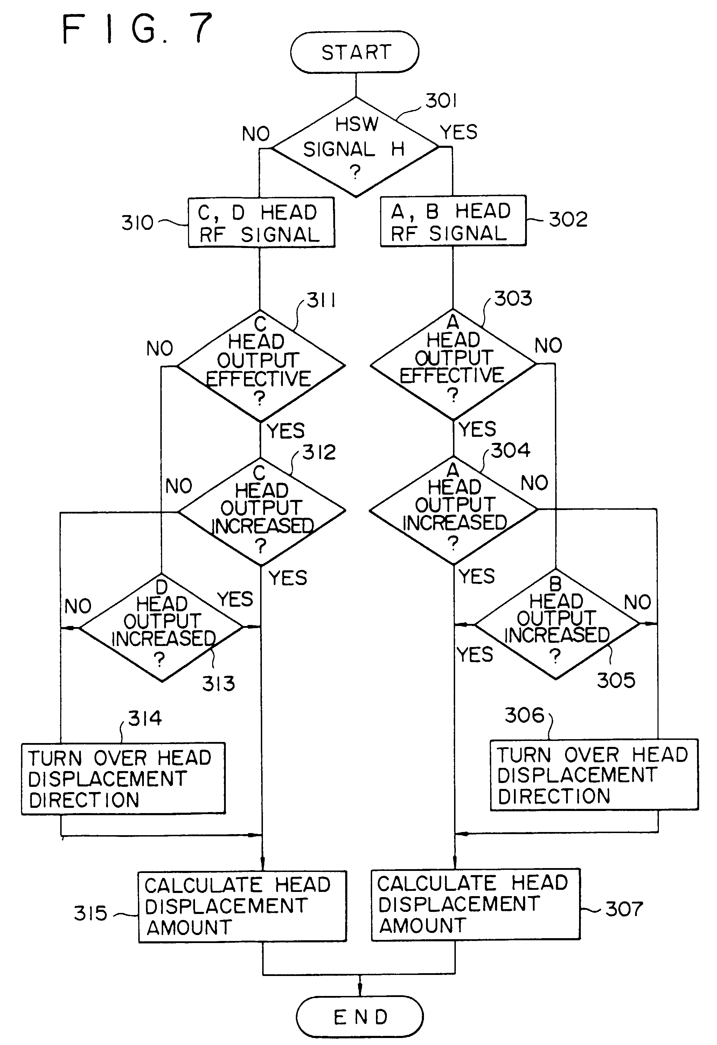

Controlling for dynamic tracking performed by the CPU 206 in the present embodiment will be described below with reference to Figure 7.

First at step 301, a level of a HSW signal is detected. In the present embodiment, when the HSW presents a high level, the magnetic heads 1A and 1B are performing tracing, but when the HSW presents a low level, the magnetic heads 1C and 1D are performing tracing.

In case it is detected at step 301 that the HSW signal is at a high level, the control sequence advances to step 302 in order to effect dynamic tracking for the magnetic heads 1A and 1B. On the other hand, when it is detected that the HSW signal is at a low level, the control sequence advances to step 310 in order to effect dynamic tracking for the magnetic heads 1C and 1D.

At step 302, envelope outputs of reproduction RF signals obtained from the magnetic head 1A and 1B are detected. After then, the control sequence advances to step 303.

At step 303, it is judged whether or not the output from the magnetic head 1A is effective. The judgment of effectiveness is performed, for example, based on whether or not the level of the reproduction RF envelope is higher than a predetermined level. If the output from the magnetic head 14 is effective, then the control sequence advances to step 304, but on the contrary if the output from the magnetic head 1A is not effective, the control sequence advances to step 305.

At step 304, it is judged whether or not the output of the reproduction RF envelope from the magnetic head 1A presents some increase from an output of the reproduction RF signal obtained upon last tracing. If the output from the magnetic head 1A presents some increase from the output obtained upon last tracing, then the control sequence advances to step 307, but if the output from the magnetic head 1A does not present any increase from the output obtained upon last tracing, then the control sequence advances to step 306.

At step 305, it is judged whether or not the output of the reproduction RF envelope from the magnetic head 1B presents some increase from an output of the reproduction RF signal obtained upon last tracing. If the output from the magnetic head 1B presents some increase from the output obtained upon last tracing, then the control sequence advances to step 307, but if the output from the magnetic head 1B does not present any increase from the output obtained upon last tracing, then the control sequence advances to step 306.

At step 306, the direction of displacement of the magnetic heads 1A and 1B is reversed because, since the level of the reproduction RF envelope obtained from the magnetic head 1A or 1B is lower than the output obtained upon last tracing, it can be judged that the amount of displacement of each of the magnetic heads 1A and 1B from the centre of the corresponding track has increased from that upon last tracing. After then, the control sequence advances to step 307.

At step 307, an amount of displacement of the magnetic heads 1A and 1B is calculated, and the displacement amount thus calculated is outputted at a predetermined timing. After then, the processing at the CPU 206 comes to an end.

On the other hand, at step 310, envelope outputs of reproduction signals obtained from the magnetic heads 1C and 1D are detected. After then, the control sequence advances to step 311.

At step 311, it is judged whether or not the output from the magnetic head 1C is effective. The judgement of effectiveness is performed, for example, based on whether or not the level of the reproduction RF envelope is higher than the predetermined level. if the output from the magnetic head 1C is effective, then the control sequence advances to step 312, but on the contrary if the output from the magnetic head 1C is not effective, the control sequence advances to step 313.

At step 312, it is judged whether or not the output of the reproduction RF envelope from the magnetic head 1C presents some increase from an output of the reproduction RF signal obtained upon last tracing. If the output from the magnetic head 1C presents some increase from the output obtained upon last tracking, then the control sequence advances to step 315, but if the output from the magnetic head 1C does not present any increase from the output obtained upon last tracing, then the control sequence advances to step 314.

At step 313, it is judged whether or not the output of the reproduction RF envelope from the magnetic head 1D presents some increase from an output of the reproduction RF signal obtained upon last tracing. If the output from the magnetic head 1D presents some increase from the output obtained upon last tracing, then the control sequence advances to step 315, but if the output from the magnetic head 1D does not present any increase from the output obtained upon last tracing, then the control sequence advances to step 314.

At step 314, the direction of displacement of the magnetic heads 1C and 1D is reversed because, since the level of the reproduction RF envelope obtained from the magnetic head 1C or 1D is lower than the output obtained upon last tracing, it can be judged that the amount of displacement of each of the magnetic heads 1C and 1D from the centre of the corresponding track has increased from that upon last tracing. After then, the control sequence advances to step 315.

At step 315, an amount of displacement of the magnetic heads 1C and 1D is calculated, and the displacement amount thus calculated is outputted at a predetermined timing. After then, the processing at the CPU 206 comes to an end.

With the present embodiment, when the magnetic heads 1a and 1B are provided on the head actuator 216 while the magnetic heads 1C and 1D are provided on the head actuator 217 as shown in Figure 2 and one of a pair of magnetic heads provided on each of the head actuators 216 and 217 traces a guard band GB while the other magnetic head traces one of tracks TRA, TRB, TRC and TRD, an output of a reproduction RF envelope can be obtained from the other magnetic head which is tracing one of the tracks TRA, TRB, TRC and TRD, and accordingly, control of dynamic tracking for the head actuators 216 and 217 and the magnetic heads 1A, 1B, 1C and 1D can be performed with stability and certainty in accordance with the output of the reproduction RF envelope.

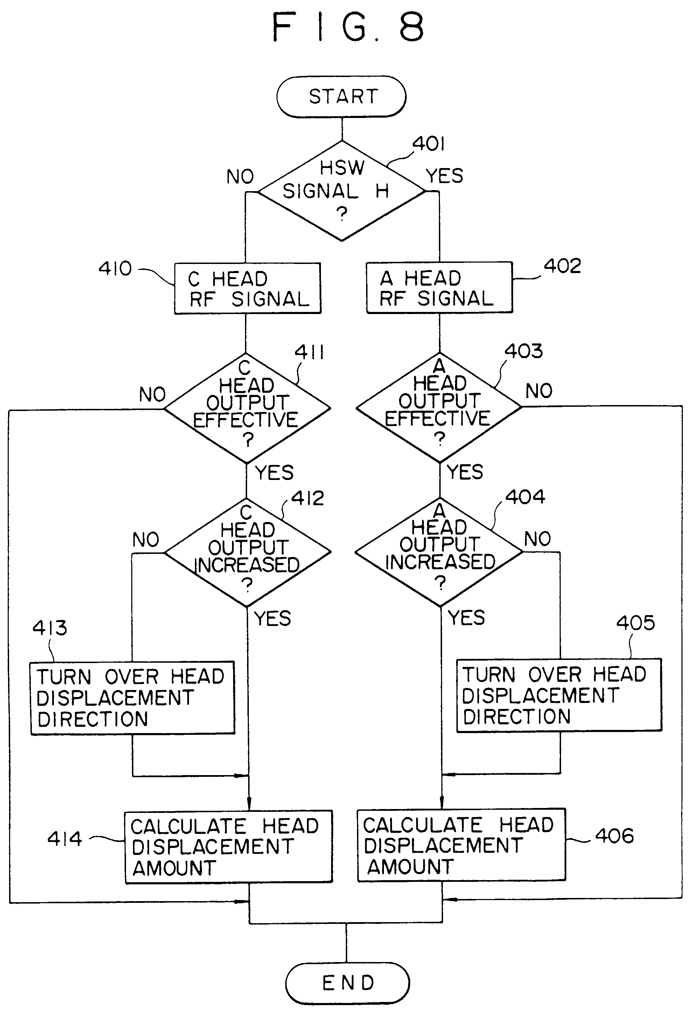

Referring now to Figure 8, there is illustrated alternative controlling processing for dynamic tracking performed with the reproducing system of the magnetic recording and reproducing apparatus shown in Figure 5. The present controlling processing is different from the controlling processing described hereinabove with reference to Figure 7 in that, since a period in which a guard band GB is traced comes after a predetermined number of cycles as seen from Figure 6, a direction and an amount of displacement of the magnetic heads 1A, 1B, 1C and 1D are determined before such period in which a guard band GB is to be traced, so that tracking may be performed beginning with a stage at which tracking of a guard band GB is completed.

In the present controlling processing, dynamic tracking can be performed in accordance with an output of a reproduction RF envelope obtained at another period preceding the period for such dynamic tracking. It is to be noted that, the other construction, action and effects of the present controlling processing are similar to those of the preceding controlling processing of Figure 7, and overlapping description thereof is omitted herein to avoid redundancy.

Referring to Figure 8, first at step 401, a level of an HSW signal is detected. In the present controlling processing, when the HSW signal has a high level, the magnetic heads 1A and 1B are performing tracing, but when the HSW signal has a low level, the magnetic heads 1c and 1D are performing tracing.

If it is detected at step 401 that the HSW signal is at a high level, the control sequence advances to step 402 in order to effect dynamic tracking for the magnetic heads 1A and 1B. On the other hand, when it is detected that the HSW signal is at a low level, the control sequence advances to step 410 in order to effect dynamic tracking for the magnetic heads 1C and 1D.

At step 402, an envelope output of a reproduction RF signal obtained from the magnetic head 1A is detected. After then, the control sequence advances to step 403.

At step 403, it is judged whether or not the output from the magnetic head 1A is effective. The judgement of effectiveness is performed, for example, based on whether or not the level of the reproduction RF envelope is higher than a predetermined level. If the output from the magnetic head 1A is effective, then the control sequence advances to step 404, but on the contrary if the output from the magnetic head 1A is not effective, then the control sequence comes to an end.

In particular, if the output from the magnetic head 1A is not effective, then it is determined that a guard band GB is being traced in the present period. Accordingly, in this instance, a direction and an amount of displacement determined already are maintained. Further, in this instance, controlling operation for dynamic tracking is kept stopped.

At step 404, it is judged whether or not the output of the reproduction RF envelope from the magnetic head 1A presents some increase from an output of the reproduction RF signal obtained upon last tracing. If the output from the magnetic head 1A presents some increase from the output obtained upon last tracing, then the control sequence advances to step 406, but if the output from the magnetic head 1A does not present any increase from the output obtained upon last tracing, then the control sequence advances to step 405.

At step 405, the direction of displacement of the magnetic heads 1A and 1B is reversed because, since the level of the reproduction RF envelope obtained from the magnetic head 1A is lower than the output obtained upon last tracing, it can be judged that the amount of displacement of each of the magnetic head 1A and 1B from the centre of the corresponding track has increased from that upon last tracing. After then, the control sequence advances to step 406.

At step 406, an amount of displacement of the magnetic heads 1A and 1B is calculated, and the displacement amount thus calculated is outputted at a predetermined timing. After then, the processing at the CPU 206 comes to an end.

On the other hand, at step 410, an envelope output of a reproduction RF signal obtained from the magnetic head 1C is detected. After that, the control sequence advances to step 411.

At step 411, it is judged whether or not the output from the magnetic head 1C is effective. The judgement of effectiveness is performed, for example, based on whether or not the level of the reproduction RF envelope is higher than a predetermined level. If the output from the magnetic head 1C is effective, then the control sequence advances to step 412, but on the contrary if the output from the magnetic head 1C is not effective, then the control sequence comes to an end.

In particular, if the output from the magnetic head 1C is not effective. then it is determined that a guard band GB is being traced in the present period. Accordingly, in this instance, a direction and an amount of displacement determined already are maintained. Further, in this instance, controlling operation for dynamic tracking is kept stopped.

At step 412, it is judged whether or not the output of the reproduction RF envelope from the magnetic head 1C presents some increase from an output of the reproduction RF signal obtained upon last tracing. If the output from the magnetic head 1C presents some increase from the output obtained upon last tracing, then the control sequence advances to step 414, but if the output from the magnetic head 1C does not present any increase from the output obtained upon last tracing, then the control sequence advances to step 413.

At step 413, the direction of displacement of the magnetic heads 1C and 1D is reversed because, since the level of the reproduction RF envelope obtained from the magnetic head 1C is lower than the output obtained upon last tracing, it can be judged that the amount of displacement of each of the magnetic heads 1C and 1D from the centre of the corresponding track has increased from that upon last tracing. After that, the control sequence advances to step 414.

At step 414, an amount of displacement of the magnetic heads 1C and 1D is calculated, and the displacement amount thus calculated is outputted at a predetermined timing. After then, the processing at the CPU 206 comes to an end.

## Claims

1. A magnetic recording and reproducing apparatus wherein a magnetic tape (200) is helically scanned by a rotary head unit (106) to record or reproduce a desired information signal onto or from the magnetic tape (200);
comprising:
information signal recording means (1A, 1B, 1C, 1D, 102A, 102B, 103, 104) for recording an information signal for one record unit across a plurality of record tracks (TR) on the magnetic tape (200) and forming a guard band (GB) between adjacent ones of said record units each composed of the same number of record tracks (TR) on the magnetic tape (200), adjacent tracks in a unit being recorded with different azimuth angles and without guard bands therebetween; characterised in that said information signal recording means (1A, 1B, 1C, 1D, 102A, 102B, 103, 104) comprises:
time base compressing means (102A, 102B, 103) for time base compressing said information signal to be recorded;
signal processing means (104) for performing predetermined processing of the time base compressed signal and selectively outputting the thus processed signal to a plurality of channels (105), said signal processing means (104) having a controlling function to control permission or inhibition of outputting of a signal to said different channels; and
a plurality of magnetic heads (1A, 1B, 1C, 1D) for recording a signal selectively outputted to said channels (105) onto the magnetic tape (200):
said magnetic heads (1A, 1B, 1C, 1D) recording, when said signal processing means (104) provides permission for signal outputting, a signal onto the same number of tracks (TR) on the magnetic tape (200), but when said signal processing means (104) provides inhibition of signal outputting, a guard band (GB) is formed on the magnetic tape (200) along a locus of scanning movement of that one of said magnetic heads (1A, 1B, 1C, 1D) to which supply of a signal is stopped.

2. Apparatus according to claim 1, further comprising head displacing elements (216, 217) which support pairs (1A, 1B; 1C, 1D;) of the magnetic heads;
level detecting means (206) for detecting levels of reproduction signals obtained when said magnetic heads (1A, 1B, 1C, 1D) scan said record tracks (TR) on the magnetic tape (200);
controlling signal forming means (206) for forming controlling signals to control said head displacing elements (216, 217) in dependence on the detected levels of reproduction signals so that said magnetic heads (1A, 1B, 1C, 1D) scan said record tracks (TR) on the magnetic tape (200), and forming such controlling signal, for a displacing element (216) supporting a pair of magnetic heads (1A, 1B) one of which heads scans a guard band (GB) on the magnetic tape (200), in accordance with the level of an output of one of said magnetic heads (1A, 1B, 1C, 1D) of the pair produced when scanning a record track (TR) on the magnetic tape (200); and
actuating means (212. 213) for actuating one of said head displacing elements (216, 217) in response to the controlling signal from said controlling signal forming means (206).

3. Apparatus according to claim 2, wherein when one head of a pair scans a guard band, the head displacing element supporting that pair is actuated in response to the controlling signal formed in dependence upon the detected level of the signal reproduced by the other head of the pair.

4. Apparatus according to claim 3 wherein said controlling signal forming means (206) includes means for judging that the said one of said pair of magnetic heads (1A, 1B, 1C, 1D) is scanning a guard band (GB) on the magnetic tape (200); and
when said judging means judges that none of said magnetic heads (1A, 1B, 1C, 1D) is scanning a guard band (GB), said controlling signal forming means (206) calculates a difference between information obtained newly from said level detecting means (206) and level information obtained already from said level detecting means (206) and originating from one of said magnetic heads (1a, 1B, 1C, 1D) from which the newly obtained information originates and determines a direction of displacement of one of said head displacing elements (216, 217) in response to the difference and forms a controlling signal in accordance with the thus determined direction of displacement; but
when said judging means (206) judges that said one of the heads scans a guard band (GB) said controlling signal forming means (206) calculates a difference between level information originating newly from the said other of said magnetic heads (1A, 1B, 1C, 1D) which is not scanning the guard band (GB) and level information originating already from the same magnetic head (1A, 1B, 1C, 1D) and determines a direction of displacement of one of said head displacing elements (216, 217) in response to the difference and forms a controlling signal in accordance with the thus determined direction of displacement.

5. Apparatus according to claim 2, wherein when a magnetic head scans a guard band, the head displacing element supporting that head is actuated in response to a fixed control amount determined before scanning of the guard band by the head.

6. Apparatus according to claim 5 wherein said controlling signal forming means (206) includes means for judging that one of said magnetic heads (1A, 1B, 1C, 1D) is scanning a guard band (GB) on a magnetic tape (200); and
when said judging means judges that none of said magnetic heads (1a, 1B, 1C, 1D) is scanning a guard band (GB), said controlling signal forming means (206) calculates a difference between information obtained newly from said level detecting means (206) and level information obtained already from said level detecting means (206) and originating from one of said magnetic heads (1A, 1B, 1C, 1D) from which the newly obtained information originates and determines a direction of displacement of one of said head displacing elements (216, 217) in response to the difference and forms a controlling signal in accordance with the thus determined direction of displacement; but when said judging means judges that a guard band (GB) is being scanned, said controlling signal forming means (206) holds and outputs an already formed controlling signal; and then: when said judging means judges that no guard band (GB) is being scanned, said controlling signal forming means (206) starts formation of a new controlling signal.

## Patentansprüche

1. Magnetaufzeichnungs- und Wiedergabe-Gerät, in dem ein Magnetband (200) mittels einer Drehkopfeinheit (106) wendelförmig überstrichen wird, um ein gewünschtes Informationssignal auf dem Magnetband (200) aufzuzeichnen oder von diesem wiederzugeben, wobei das Gerät umfaßt: Informationssignal-Aufzeichnungsmittel (1A, 1B, 1C, 1D, 102A, 102B, 103, 104) zum Aufzeichnen eines Informationssignals für eine Aufzeichnungseinheit über eine Vielzahl von Aufzeichnungsspuren (TR) hinweg auf dem Magnetband (200) und Bilden eines Schutzbands (GB) zwischen benachbarten der Aufzeichnungseinheiten, wovon jede aus der gleichen Anzahl von Aufzeichnungsspuren (TR) auf dem Magnetband (200) zusammengesetzt ist, wobei benachbarte Spuren in einer Einheit mit verschiedenen Azimutwinkeln und ohne Schutzbänder zwischen diesen aufgezeichnet werden, dadurch **gekennzeichnet,** daß die Informationssignal Aufzeichnungsmittel (1A, 1B, 1C, 1D, 102A, 102B, 103, 104) umfassen:
ein Zeitbasiskomprimierungsmittel (102A, 102B, 103) zur Zeitbasiskomprimierung des aufzuzeichnenden Informationssignals,
ein Signalverarbeitungsmittel (104) zum Durchführen einer vorbestimmten Verarbeitung des zeitbasiskomprimierten Signals und selektiven Ausgeben des auf diese Weise verarbeiteten Signals an eine Vielzahl von Kanälen (105), wobei das Signalverarbeitungsmittel (104) eine Steuerfunktion zum Steuern des Zulassens oder Sperrens des Ausgebens eines Signals an die verschiedenen Kanäle hat, und
eine Vielzahl von Magnetköpfen (1A, 1B, 1C, 1D) zum Aufzeichnen eines Signals, das selektiv an die Kanäle (105) ausgegeben ist, auf dem Magnetband (200),
wobei die Magnetköpfe (1A, 1B, 1C, 1D), wenn das Signalverarbeitungsmittel (104) das Ausgeben eines Signals zuläßt, ein Signal in der gleichen Anzahl von Spuren (TR) auf dem Magnetband (200) aufzeichnen, jedoch wenn das Signalverarbeitungsmittel (104) das Ausgeben eines Signals sperrt, ein Schutzband (GB) auf dem Magnetband (200) längs einer Ortskurve der Überstreichungsbewegung desjenigen der Magnetköpfe (1A, 1B, 1C, 1D), zu dem die Zufuhr eines Signals gestoppt ist, bilden.

2. Gerät nach Anspruch 1, das ferner umfaßt:
Kopf-Auslenkelemente (216, 217), die Paare (1A, 1B; 1C, 1D;) der Magnetköpfe tragen,
ein Pegelerfassungsmittel (206) zum Erfassen von Pegeln von Wiedergabesignalen, die gewonnen werden, wenn die Magnetköpfe (1A, 1B, 1C, 1D) die Aufzeichnungsspuren (TR) auf dem Magnetband (200) abtasten,
ein Steuersignalbildungsmittel (206) zum Bilden von Steuersignalen zum Steuern der Kopf-Auslenkelemente (216,217) in Abhängigkeit von den erfaßten Pegeln von Wiedergabesignalen, so daß die Magnetköpfe (1A, 1B, 1C, 1D) die Aufzeichnungsspuren (TR) auf dem Magnetband (200) abtasten, und Bilden eines derartigen Steuersignals für ein Auslenkelement (216), das ein Paar von Magnetköpfen (1A, 1B) trägt, wobei einer dieser Köpfe ein Schutzband (GB) auf dem Magnetband (200) abtastet, in Übereinstimmung mit dem Pegel eines Ausgangssignals eines der Magnetköpfe (1A, 1B, 1C, 1D) des Paars, welches Ausgangssignal erzeugt wird, wenn eine Aufzeichnungsspur (TR) auf dem Magnetband (200) abgetastet wird, und
Betätigungsmittel (212, 213) zum Betätigen eines der Kopf-Auslenkelemente (216, 217) in Reaktion auf das Steuersignal aus dem Steuersignalbildungsmittel (206).

3. Gerät nach Anspruch 2, in dem, wenn ein Kopf eines Paars ein Schutzband abtastet, das Kopf-Auslenkelement, welches das Paar trägt, in Reaktion auf das Steuersignal betätigt wird, das in Abhängigkeit von dem erfaßten Pegel des Signals gebildet ist, welches mittels des anderen Kopfs des Paars erzeugt ist.

4. Gerät nach Anspruch 3, in dem das Steuersignalbildungsmittel (206) ein Mittel zum Entscheiden dahingehend enthält, daß der eine des Paars von Magnetköpfen (1A, 1B, 1C, 1D) ein Schutzband (GB) auf dem Magnetband (200) abtastet, und
wenn das Mittel zum Entscheiden entscheidet, daß keiner der Magnetköpfs (1A, 1B, 1C, 1D) ein Schutzband (GB) abtastet, das Steuersignalbildungsmittel (206) eine Differenz berechnet zwischen Information, die neuerdings von dem Pegelerfassungsmittel (206) gewonnen ist, und Pegel-Information, die bereits von dem Pegelerfassungsmittel (206) gewonnen wurde und aus einem der Magnetköpfe (1A, 1B, 1C, 1D) stammt, aus dem die neuerdings gewonnene Information stammt, und eine Richtung der Auslenkung eines der Kopf-Auslenkelemente (216, 217) in Reaktion auf die Differenz bestimmt und ein Steuersignal in Übereinstimmung mit der auf diese Weise bestimmten Richtung der Auslenkung bildet, jedoch
wenn das Mittel zum Entscheiden (206) entscheidet, daß der eine der Köpfe ein Schutzband (GB) abtastet, das Steuersignalbildungsmittel (206) eine Differenz berechnet zwischen Pegel-Information, die neuerdings aus dem anderen der Magnetköpfe (1A, 1B, 1C, 1D) stammt, der nicht das Schutzband (GB) abtastet, und Pegel-Information, die bereits aus demselben Magnetkopf (1A, 1B, 1C, 1D) stammte, und eine Richtung der Auslenkung des einen der Kopf-Auslenkelemente (216, 217) in Reaktion auf die Differenz bestimmt und ein Steuersignal in Übereinstimmung mit der auf diese Weise bestimmten Richtung der Auslenkung bildet.

5. Gerät nach Anspruch 2, in dem, wenn ein Magnetkopf ein Schutzband abtastet, das Kopf-Auslenkelement, welches diesen Kopf trägt, in Reaktion auf eine feste Steuergröße betätigt wird, die vor dem Abtasten des Schutzbands mittels des Kopfs bestimmt ist.

6. Gerät nach Anspruch 5, in dem das Steuersignalbildungsmittel (206) ein Mittel zum Entscheiden dahingehend enthält, daß einer der Magnetköpfe (1A, 1B, 1C, 1D) ein Schutzband (GB) auf einem Magnetband (200) abtastet, und
wenn das Mittel zum Entscheiden entscheidet, daß keiner der Magnetköpfe (1A, 1B, 1C, 1D) ein Schutzband (GB) abtastet, das Steuersignalbildungsmittel (206) eine Differenz berechnet zwischen Information, die neuerdings von dem Pegelerfassungsmittel (206) gewonnen ist, und Pegel-Information, die bereits von dem Pegelerfassungsmittel (206) gewonnen wurde und von einem der Magnetköpfe (1A, 1B, 1C, 1D) stammt, von welchem die neuerdings gewonnene Information stammt, und eine Richtung der Auslenkung eines der Kopf-Auslenkelemente (216, 217) in Reaktion auf die Differenz bestimmt und ein Steuersignal in Übereinstimmung mit der auf diese Weise bestimmten Richtung der Auslenkung bildet, jedoch
wenn das Mittel zum Entscheiden entscheidet, daß ein Schutzband (GB) abgetastet wird, das Steuersignalbildungsmittel (206) anhält und ein bereits gebildetes Steuersignal ausgibt, und dann,
wenn das Mittel zum Entscheiden entscheidet, daß kein Schutzband (GB) abgetastet wird, das Steuersignalbildungsmittel (206) die Bildung eines neuen Steuersignals beginnt.

## Revendications

1. Appareil d'enregistrement et de reproduction magnétique dans lequel une bande magnétique (200) est balayée hélicoïdalement par une unité de tête tournante (106) pour enregistrer ou reproduire un signal d'informations désiré sur ou à partir de la bande magnétique (200) ;
comprenant :
un moyen d'enregistrement de signal d'informations (1A, 1B, 1C, 1D, 102A, 102B, 103, 104) pour enregistrer un signal d'informations pour une unité d'enregistrement à travers une pluralité de pistes d'enregistrement (TR) sur la bande magnétique (200) et pour former une bande de garde (GB) entre des unités adjacentes desdites unités d'enregistrement chacune composée du même nombre de pistes d'enregistrement (TR) sur la bande magnétique (200), des pistes adjacentes dans une unité étant enregistrées avec des angles d'azimut différents et sans bande de garde entre elles ; caractérisé en ce que ledit moyen d'enregistrement du signal d'informations (1A, 1B, 1C, 1D, 102A, 102B, 103, 104) comprend :
un moyen de compression de base de temps (102A, 102B, 103) pour compresser en base de temps ledit signal d'informations à enregistrer ;
un moyen de traitement de signal (104) pour réaliser un traitement prédéterminé du signal compressé en base de temps et pour fournir sélectivement le signal ainsi traité à une pluralité de canaux (105), ledit moyen de traitement de signal (104) ayant une fonction de commande pour commander l'autorisation ou l'interdiction de fourniture d'un signal auxdits différents canaux ; et
une pluralité de têtes magnétiques (1A, 1B, 1C, 1D) pour enregistrer un signal fourni sélectivement auxdits canaux (105) sur la bande magnétique (200) :
lesdites têtes magnétiques (1A, 1B, 1C, 1D) enregistrent, lorsque ledit moyen de traitement de signal (104) fournit une autorisation de fourniture d'un signal, un signal sur le même nombre de pistes (TR) sur la bande magnétique (200), mais lorsque ledit moyen de traitement de signal (104) fournit l'interdiction de fourniture de signal, une bande de garde (GB) est formée sur la bande magnétique (200) le long du lieu de déplacement de balayage de celle desdites têtes magnétiques (1A, 1B, 1C, 1D) à laquelle la fourniture d'un signal est arrêtée.

2. Appareil selon la revendication 1, comprenant en outre des éléments de déplacement de tête (216, 217) qui supportent des paires (1A, 1B ; 1C, 1D) de têtes magnétiques ;
un moyen de détection de niveau (206) pour détecter des niveaux de signaux de reproduction obtenus lorsque lesdites têtes magnétiques (1A, 1B, 1C, 1D) balayent lesdites pistes d'enregistrement (TR) sur la bande magnétique (200) ;
un moyen de formation de signal de commande (206) pour former des signaux de commande pour commander lesdits éléments de déplacement de tête (216, 217) en fonction des niveaux détectés des signaux de reproduction pour que lesdites têtes magnétiques (1A, 1B, 1C, 1D) balayent lesdites pistes d'enregistrement (TR) sur la bande magnétique (200), et pour former ce signal de commande, pour un élément de déplacement (216) supportant une paire de têtes magnétiques (1A, 1B) dont les têtes balayent une bande de garde (GB) sur la bande magnétique (200), selon le niveau de sortie d'une desdites têtes magnétiques (1A, 1B, 1C, 1D) de la paire produite lors du balayage d'une piste d'enregistrement (TR) sur la bande magnétique (200) ; et
un moyen d'actionnement (212, 213) pour actionner un desdits éléments de déplacement de tête (216, 217) en réponse au signal de commande dudit moyen de formation de signal de commande (206).

3. Appareil selon la revendication 2, dans lequel lorsqu'une tête d'une paire balaye une bande de garde, l'élément de déplacement de tête supportant cette paire est actionné en réponse au signal de commande formé en fonction du niveau détecté du signal reproduit par l'autre tête de la paire.

4. Appareil selon la revendication 3, dans lequel ledit moyen de formation de signal de commande (206) comprend un moyen pour tester que ladite tête de ladite paire de têtes magnétiques (1A, 1B, 1C, 1D) balaye une bande de garde (GB) sur la bande magnétique (200) ; et
lorsque ledit moyen de test teste qu'aucune desdites têtes magnétiques (1A, 1B, 1C, 1D) ne balaye une bande de garde (GB), ledit moyen de formation de signal de commande (206) calcule une différence entre des informations nouvellement obtenues par ledit moyen de détection de niveau (206) et des informations de niveau déjà obtenues par ledit moyen de détection de niveau (206) et émanant d'une desdites têtes magnétiques (1A, 1B, 1C, 1D) à partir de laquelle les informations nouvellement obtenues émanent et détermine une direction de déplacement d'un desdits éléments de déplacement de tête (216, 217) en réponse à la différence et forme un signal de commande selon la direction de déplacement ainsi déterminée ; mais
lorsque ledit moyen de test (206) teste qu'une desdites têtes balaye une bande de garde (GB) ledit moyen de formation de signal de commande (206) calcule une différence entre des informations de niveau émanant nouvellement de ladite autre desdites têtes magnétiques (1A, 1B, 1C, 1D) qui ne balaye pas la bande de garde (GB) et des informations de niveau émanant déjà de la même tête magnétique (1A, 1B, 1C, 1D) et détermine une direction de déplacement d'un desdits éléments de déplacement de tête (216, 217) en réponse à la différence et forme un signal de commande selon la direction de déplacement ainsi déterminée.

5. Appareil selon la revendication 2, dans lequel lorsqu'une tête magnétique balaye une bande de garde, l'élément de déplacement de tête supportant cette tête est actionné en réponse à une quantité de commande fixe déterminée avant le balayage de la bande de garde par la tête.

6. Appareil selon la revendication 5, dans lequel ledit moyen de formation de signal de commande (206) comprend un moyen pour tester qu'une desdites têtes magnétiques (1A, 1B, 1C, 1D) balaye une bande de garde (GB) sur une bande magnétique (200) ; et
lorsque ledit moyen de test teste qu'aucune desdites têtes magnétiques (1A, 1B, 1C, 1D) ne balaye une bande de garde (GB), ledit moyen de formation de signal de commande (206) calcule une différence entre des informations nouvellement obtenues par ledit moyen de détection de niveau (206) et des informations de niveau déjà obtenues par ledit moyen de détection de niveau (206) et émanant d'une desdites têtes magnétiques (1A, 1B, 1C, 1D) à partir de laquelle les informations nouvellement obtenues émanent et déterminent une direction de déplacement d'un desdits éléments de déplacement de tête (216, 217) en réponse à la différence et forme un signal de commande selon la direction de déplacement ainsi déterminé ; mais lorsque ledit moyen de test teste qu'une bande de garde (GB) est balayée, ledit moyen de formation de signal de commande (206) maintient et fournit un signal de commande déjà formé ; et ensuite, lorsque ledit moyen de test teste qu'aucune bande de garde (GB) n'est balayée, ledit moyen de formation de signal de commande (206) arrête la formation d'un nouveau signal de commande.
